# EUROPEAN PATENT SPECIFICATION

(11) **EP 3 318 498 B1**
(45) Date of publication and mention of the grant of the patent: **27.05.2020**
(21) Application number: 16197844.0
(22) Date of filing: 08.11.2016
(51) Int. Cl.: B65B 5/12, B65B 25/06, B65B 35/44, B65B 35/38, B07C 5/16, B07C 5/02, B07C 5/342, B07C 5/38, B07C 1/06, B65G 47/31, B65G 47/28, B25J 11/00, B25J 9/00, G01G 19/30, G01G 19/38, B65G 21/14, B65B 5/10, B65B 43/52, B65B 43/56, B65G 47/08, B65B 57/14

(54) **METHOD AND DEVICE FOR PACKAGING GROUPS OF OBJECTS**
VERFAHREN UND VORRICHTUNG ZUM VERPACKEN VON OBJEKTGRUPPEN
PROCÉDÉ ET DISPOSITIF D'EMBALLAGE DE GROUPES D'OBJETS

(43) Date of publication of application: 09.05.2018
(73) Proprietor: Poly-clip System GmbH & Co. KG, 65795 Hattersheim (DE)
(72) Inventor: HOFSCHULTE, Jens, 31275 Lehrte (DE); KREIENBORG, Marco, 49429 Visbek (DE)
(74) Representative: Eisenführ Speiser

(56) References cited:
- EP-A1- 2 733 095
- DE-A1-102004 056 031
- US-A1- 2005 137 744
- US-A1- 2016 318 715

## Description

The present invention relates to a method and a device for arranging objects in groups in which the objects are supplied by a first transport device in a supply order, and are positioned on a second transport device in a transport order by the first transport device. During positioning the objects on the second transport device, a gap between the subsequently arranged objects is created that has a width sufficient for accommodating a further object.

Products, and in particular food products, may consist of a tray or shelf which contains a group of objects of the same kind, such as meat pieces, which together fulfils a predetermined criterion, like the total weight. Food products may contain parts of poultry, such as legs, wings or breast filets, or any other kind of meat. Naturally other food products may be packaged, such as fruit or vegetables. Said food pieces are transferred to a portioning device on a supply conveyor and picked up by a respective pickup device to be placed on a tray or shelf. The pickup device selects the meat pieces according to their individual weight as one example of an individual criterion, and forms groups of pieces which have a predefined total weight as the corresponding common criterion in trays provided in the working range of the pickup device.

Such a portioning device is known from EP patent 1 226 408. The device includes a conveyor which supplies items to a weighing plate arranged in the working area of a robot arm. A gripping element at the robot arm selectively grips the weighted items and puts them into respective carton packs in a receiving area.

A further portioning device is disclosed in EP patent 1 819 994. This known device comprises feeding conveyors for feeding objects to be packaged towards weighing stations. Additional transport conveyors carry the weighted objects through working areas of pickup robots which pick up the objects from the transport conveyors and place them in respective packing provided on take-away conveyors.

US patent application 2016/0318715 discloses a method and a device for arranging objects in groups, according to the preamble of claims 1 and 12. The device for conveying and grouping fragmented products, like food products or technical products, consists of a first conveying device for delivering products in a first conveying direction, and a second conveying device for delivering said products in a second conveying direction. A grouping device is provided for placing them in a product matrix with the products in a defined distance to each other and with product groups in a defined distance to each other.

In these known devices, for placing the objects in the respective packing, each of the objects has to be picked up by a pickup device. For handling a high number of objects, a respective high number of pickup devices have to be provided. Furthermore, each object that not match the missing weight in an existing group of objects has to be guided back to the supply or feeding conveyor for once again being weighted and griped by the pickup device. Alternatively, a high number of packing has to be provided, to place the objects which do not match a missing weight in one of the existing groups of objects in a new packing.

Thus, it is an object of the present invention to provide a method and a device for optimizing the packaging of objects arranged in groups which fulfil a predetermined common criterion, such as the total weight. The inventive device is of a simpler design, e.g. by necessitating a less number of components, such as transport devices or pickup devices, and the method increases the number of objects which may be packaged as well as the accuracy of the packaged group of objects, regarding the predetermined common criterion.

According to the present invention, there is provided a method for arranging objects in groups. The objects have an individual criterion, and the group of objects fulfils a predetermined common criterion. The method comprises the steps of supplying said objects on a first transport device in a supply order, positioning the objects on a second transport device according to the supply order in a transportation order, and creating a gap between subsequently arranged objects during positioning the objects on the second transport device, with the gap having a width sufficient for accommodating a further object.

The gap between the objects, when positioned on the second transport device, enables a regrouping of the objects on the second transport device by changing the transportation order. Thereby, groups of objects may be created, which fulfil a predetermined common criterion. During the rearrangement of the objects for forming said groups of objects, it is not necessary to pick up all objects, whereby the time and the number of equipment, such as pickup devices, may be reduced.

Moreover, changing the transportation order of the objects on the second transport device is executed by picking up a selected object from the second transportation device, and placing it in the gap between two subsequently arranged objects. Thereby, a group of objects is created without handling each of the objects of said group.

According to the inventive method, an individual criterion of each of the objects is determined. The individual criterion of each of the objects forms the basis for the common criterion of the group of objects. As the individual criterion, the weight, the size or the kind of objects or the like may be selected. Accordingly, the predetermined common criterion of the group of objects may be the total weight of the group, identical size or kind of objects in a group or other suitable features, such as the shape or colour of the objects.

The determination of the individual criterion of each of the objects may be executed at different time points of the packaging process.

In a preferred embodiment of the method according to the present invention, the individual criterion is determined immediately before the objects are placed on the first transport device. Alternatively, the determination may also be executed during the transport on the first transport device. The first transport device, in this case, may be provided with a determination device, such as weighing equipment including a weighing cell or platform, for determining the weight of the objects as the individual criterion. Naturally, it is also possible to determine the individual criterion immediately before or after the placement of the objects on the second transport device which, in such case, may include the determination equipment.

It has to be understood that other criteria than the weight may be determined, such as the kind of objects, their shape or colour. In such cases, suitable determination devices have to be provided, such as cameras or laser systems.

Additionally, changing the order of the objects on the second transport device for forming groups of objects may be executed by removing at least one selected object from the objects arranged in the transportation order. Thereby, a group of objects is created without handling any of the objects of said group.

The second transport device has a first or feeding end at which the objects are fed onto the second transport device, and a second or dispensing end for dispensing the groups of objects for further treatment.

The arrangement of the objects in a group which fulfils a predetermined common criterion may be effected in nearly any region of the second conveyor device. However, it is preferred that the groups of objects are formed in defined regions of the second transport device. One of said defined regions may be the dispensing end of the second transport device, whereby the group of objects may directly be dispensed for further treatment.

Accordingly, for changing the transportation order for forming groups of objects, one or several selected objects may be removed from the objects arranged in transportation order, whereby, in a defined region of the second transport device, a group of objects may be formed, which fulfils the common criterion. Alternatively, a selected object may be removed from the second transport device, and may be placed in a gap between two objects arranged subsequently in transportation order on the second transport device, for forming a group of objects which fulfils the common criterion.

It has to be understood that the object when being removed from the second transport device for creating a group of objects by the objects remaining in transportation order and which fulfils the common criterion, may be placed in a gap between other objects for forming a further group of objects that fulfils the common criterion.

As already mentioned, the individual criterion of the objects may be the weight, the size, the kind, the shape or the colour of the objects, and the predetermined common criterion to be fulfilled may be the total weight of the group or identical size, kind, shape or colour of the objects in a group.

Advantageously, for packaging food products, the individual criterion is the weight of each single object, and the predetermined criterion is the total weight of the groups of objects. The inventive method thereby enables the production of packing having a content of identical weight.

In order to enhance the productivity of the forming of groups of objects having identical weight, according to the present invention, the objects are weighted before being positioned on the second transport device. Thereby, the complete transport path of the second transport device may be used for forming groups of objects. Alternatively, the length of the second transport device may be reduced to a minimum. It has to be understood that also other criteria that form the basis for a predetermined common criterion, may be detected before the objects are positioned on the second transport device

For enabling a pickup device to selectively pick up and rearrange objects for forming a group of objects which fulfils the predetermined common criterion, it is further of advantage that the initial position of each object, when positioned on the second transport device, is registered or stored. This enables an optimized picking up und rearranging of objects for forming groups of objects which fulfil a predetermined common criterion.

Further according to the inventive method, a pickup device is provided which picks up and rearranges objects from and to the second transport device. The pickup device may be controlled such that it picks up a selected object from the objects arranged in transportation order for forming a first group of objects that fulfils the predetermined common criterion, and for placing the picked up object in a gap between two subsequently arranged objects for forming a further group of objects that fulfils the predetermined common criterion.

The pickup device is controlled on the basis of the initial position and the individual criterion of each object when positioned on the second transport device. The data regarding the initial position and the individual criterion of each object on the second transport device may be stored in a control unit which controls the movement of the pickup device such that the number of objects to be picked up and rearranged for forming groups which fulfil a predetermined common criterion is reduced to a minimum.

It is further of advantage that the first and/or the second transport device are controlled on the basis of the determined individual criteria and the position of the objects on the first and/or second transport device. That means, in case that the objects positioned in the transportation order on the second transport device fulfil the predetermined common criterion, the transportation speed of the second transport device may be increased. Accordingly, in the case that a high number of objects has to be removed and/or inserted into the row of objects positioned in the transportation order on the second transport device, its transportation speed may be decreased. The same is true with regard to the first transport device, the transportation speed of which may be controlled accordingly.

In a preferred embodiment of the present invention, the objects are arranged on the second transport device in at least one row aligned in the transportation or transfer direction of the second transport device. Accordingly, subsequently arranged groups of objects may be formed which may subsequently be dispensed, whereby the further treatment may be facilitated.

Alternatively, for increasing the productivity, the objects may be arranged on the second transport device in two or more rows aligned in the transportation or transfer direction of the second transport device.

In the case that the objects are arranged in two or more rows on the second transport device, an object to be selected for being positioned in a gap between two subsequently arranged objects may be selected from any of the two or more rows of objects on the second transport device. Thereby, the number of objects which have to be picked up for forming groups is reduced in relation to the number of groups of objects formed.

The group of objects formed during the transport of the objects along the second transport device is dispensed at the second end or dispensing end of the second transport device for further treatment, such as a cooking or smoking treatment, after which the groups of objects may be packaged.

Further according to the inventive method, a group of objects is placed in a packaging by the second transport device. The group of objects may directly be dispensed into a packaging or container provided at the dispensing end of the second transport device. Additional treatment steps for the packaging of the group of objects are not necessary, and the packaging process is shortened.

According to the present invention, there is provided a device for arranging objects in groups for carrying out the inventive method. The device comprises a first transport device for supplying said objects in a supply order and a second transport device on which the objects are positioned by the first transport device in a transportation order. In the inventive device, the objects are arranged on the second transport device with a gap between subsequently arranged objects during positioning the objects on the second transport device, with the gap having a width sufficient for accommodating a further object.

Furthermore, the inventive device comprises a pickup device for picking up a selected object from the second transportation device, and placing it in the gap between two subsequently arranged objects for forming a group of objects that fulfils a predetermined criterion.

In an advantageous embodiment, the inventive device further comprises means for detecting an individual criterion of each of the objects.

The device for arranging objects in groups according to the present invention thereby provides all advantages explained in conjunction with the inventive method.

It has to be noted that the inventive device may also carry out alternative methods for arranging objects in groups, with the objects having an individual criterion, and the groups have a predetermined common criterion.

Further advantages and preferred embodiments of the present invention will be described in the following together with the drawings listed below. The expressions "left", "right", "below" and "above" used in the following description are referred to the drawings in an alignment such that the reference numbers and the notation of the figures used can be read in normal orientation.
- Fig. 1:: is a schematic and perspective view of an embodiment of a device according to the present invention; and
- Fig. 2:: is a schematic and perspective view of the rear side of the device according to Fig. 1 where the registering unit and the pickup device have been omitted.

In a device for arranging objects in groups, single objects are provided and arranged such that they form groups of objects that fulfil one or more predetermined criteria. An example of such a device is a packaging machine in which single objects are arranged in groups to be packaged.

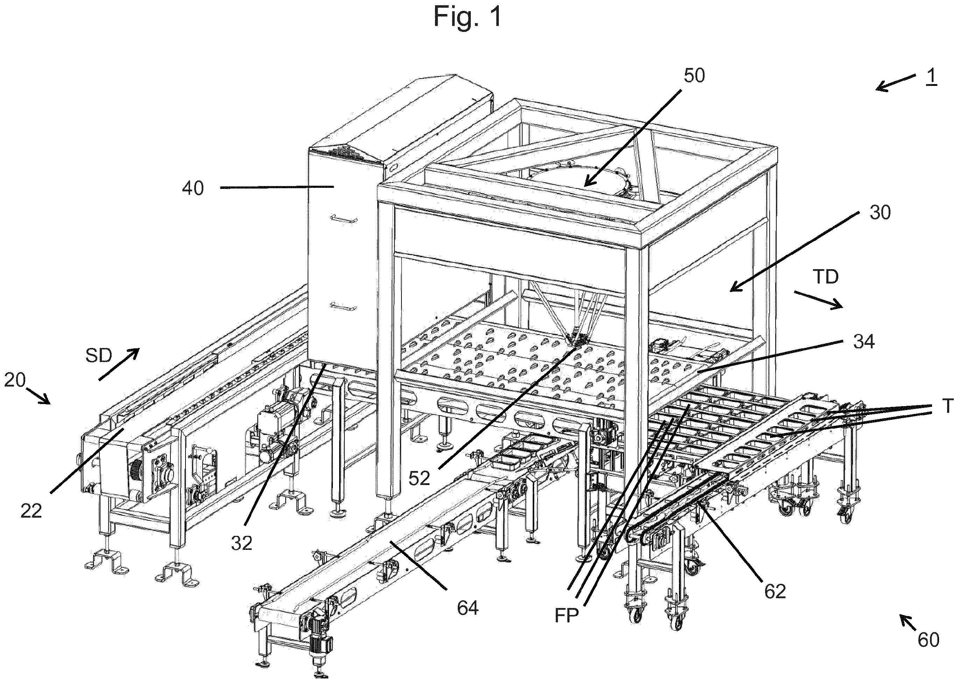

Fig. 1 is a schematic and perspective view of an embodiment of a device according to the present invention. The device 1 of Fig. 1 is a grading machine or grader for grouping and packaging objects 10, e.g. pieces of meat, such as legs, wings or breast filets of poultry.

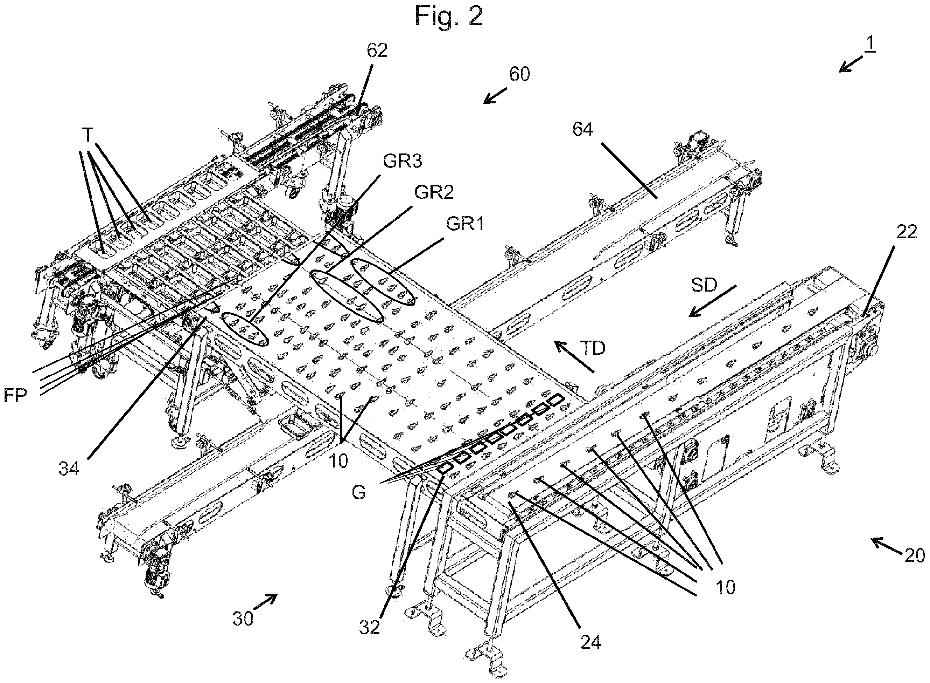

Objects 10 are supplied into grader 1 by a first transport device or supply conveyor 20 in a supply direction SD and in a supply order. Objects 10 are placed on a second transport device or feed out conveyor 30 in a transportation order and are conveyed in a transportation direction TD aligned approximately orthogonal to supply direction SD (cf. Fig. 2).

Feed out conveyor 30 has a first end or feeding end 32 onto which objects 10 are fed by supply conveyor 20, and a second end or dispensing end 34 for dispensing the groups GR of objects 10 for further treatment (cf. Fig. 2).

A feed out conveyor may comprise one ore more transportation tracts directed in transportation direction TD, on which objects 10 are arranged in one ore more rows. In the embodiment of Figs. 1 and 2, feed out conveyor 30 has eight transportation tracks. That means, objects 10 may be arranged in eight parallel rows in transportation direction TD.

Supply conveyor 20 according to Figs. 1 and 2 is a telescopic conveyor, and has a first end 22 and a second end 24. Second end 24 may reversibly be moved in supply direction SD, such that objects 10 may be placed on feeding end 32 of feed out conveyor 30. Supply conveyor 20 is controlled such that objects 10 are arranged in said eight rows and in columns aligned parallel to supply direction SD.

Before objects 10 are placed on supply conveyor 20 to be supplied into grader 1, objects are weighed by a not shown weighing device which may be arranged at first end 22 of supply conveyor 20.

As further can be seen in Fig. 1, above feeding end 32 of feed out conveyor 30, a registering device in the form of an optical system 40 is positioned to register the initial position of each object 10 on feed out conveyor 30. The registering device or optical system 40 may include one ore more cameras. It has to be understood that, dependent on the kind of objects, also other registering means may be provided, such as laser, ultra sonic or radar devices.

Above the central region of feed out conveyor 30, a pickup device in the form of a so-called delta robot 50 with a pickup element 52 is positioned such that its working range covers the whole width of feed out conveyor 30, and a major part of the length of feed out conveyor 30 seen in transportation direction TD, including dispensing end 34.

The weighing device, supply conveyor 20, feed out conveyor 30, optical system 40 and delta robot 50 are coupled to a control unit which is not shown in Figs. 1 and 2.

At dispensing end 34 of feed out conveyor 30, a packaging arrangement 60 is provided which includes a delivery conveyor 62 for delivering empty packing or trays T into filling positions FP below dispensing end 34 of feed out conveyor 30, and a discharge conveyor 64 for discharging filled trays T from grader 1. Filling positions FP are aligned to the rows of objects 10 on feed out conveyor 30.

As can further be seen in Figs. 1 and 2, a supply area is arranged between delivery conveyor 62 and trays T in filling positions FP. In the supply area, additional trays T are provided for replacing filled trays T when moved out of filling positions FP towards discharge conveyor 64.

In grader 1, objects 10 have to be arranged in groups of a predetermined weight. Said groups of objects 10 are then placed in trays and transferred out of grader 1.

For arranging objects 10, such as pieces of poultry, in groups according to the present invention, and for placing said groups of objects in trays T, said objects 10 are weighed and placed in a supply order on supply conveyor 20. The information regarding the weight of each object 10 and its position on supply conveyor 20 is transferred to the control unit. The position of objects 10 on supply conveyor 20 may e.g. be determined on the basis of the time point of placement and speed of conveyor 20. Supply conveyor 20 transfers objects 10 towards feeding end 32 of feed out conveyor 30 in supply direction SD. By telescoping supply conveyor 20, second end 24 which is positioned above feeding end 32 of feed out conveyor 30, is reversibly moved in supply direction SD. Thereby, objects 10 are transferred to feed out conveyor 30, and placed on feeding end 32 in columns with one object 10 in each row. By repeating the placement of columns of objects 10, objects 10 form rows on feed out conveyor 30 in transportation order, which differs from the supply order. During placing objects 10 on feeding end 32, feed out conveyor 30 is driven with a speed adapted to the speed of supply conveyor 20, such that a placement of objects 10 in columns and rows may be realized. Feed out conveyor 30 may be driven continuously or step by step.

Furthermore, the conveying speed of supply conveyor 20 and its telescoping speed are adapted such that objects 10, when placed on feed out conveyor 30, have a defined distance to objects 10 previously positioned in the same row on feed out conveyor 30. That means that between two objects 10 arranged in the same row on feed out conveyor 30, a gap G of a defined width is created. Accordingly, between two subsequent columns of objects 10 on feed out conveyor 30, a gap G of identical width is created. The width of gaps G is selected such that an additional object 10 may be placed between two subsequently arranged objects 10 on feed out conveyor 30.

It has to be understood that the width of gaps G may be varied dependent on the size of objects 10. The adaption of the size of gaps G may be executed by varying one ore more of the conveyor speed or the telescoping speed of supply conveyor 20 or the transportation speed of feed out conveyor 30.

The columns of objects 10, after being placed on feed out conveyor 30, pass camera system 40 which registers the position of each object 10 on feed out conveyor 30, and transfers this information to the control unit.

In the control unit, the information regarding the weight of each object and its position on supply conveyor 20 is used for identifying and confirming the position of each object 10 on feed out conveyor 30.

A matrix of objects 10 on feed out conveyor 30 together with their respective weight is created, which forms the basis for controlling delta robot 50.

The control unit calculates the total weight of objects 10 subsequently arranged in the rows and compares the value with a predetermined total weight.

In the case that the predetermined total weight is not reached, the weight of one or more of the subsequently arranged objects 10 is added until the predetermined weight is reached. In case that the predetermined weight is exceeded by adding the next object 10 in the row, said next object is excluded and the control unit selects an object 10 out of the plurality of objects on feed out conveyor 30 that matches the missing weight in the group GR of objects 10, and places the selected object 10 in a gap G between two subsequently arranged objects 10 in the group GR. This selected object 10 may be positioned on any of the rows on feed out conveyor 30, but it may not already be part of another group GR of objects 10.

Alternatively, in the case that a number of objects 10 arranged in a row exceeds the predetermined total weight of a group GR of objects 10, and one of the objects 10 of this group GR has a weight that matches the excess of weight, this object 10, independent from its current position in the group GR, is removed such that the remaining objects 10 form a group GR that matches the predetermined total weight.

The control unit may also select two or more objects 10 out of the plurality of objects 10 positioned on feed out conveyor 30, for removing said objects 10 from their position in a row of objects 10, or for placing said objects 10 in respective gaps G between subsequently arranged objects 10, in order to form groups GR of objects 10 which have the predetermined total weight.

After arranging objects 10 in groups GR of a predetermined total weight, said groups GR are transferred to dispensing end 34 of feed out conveyor 30 and delivered into trays T arranged below dispensing end 34 in filling position FP. A loaded tray T is then moved out of filling position FP towards discharge conveyor 64. A further tray T positioned adjacent loaded tray T in the supply area between delivery conveyor 62 and trays T in filling position FP is moved into empty filling position FP for receiving the next group GR of objects 10 from feed out conveyor 30.

In Fig. 2, specific groups GR1 to GR3 of objects 10 as well as the remaining objects 10 of the preceding groups GR of objects 10 are exemplarily indicated. As can be seen, each of groups GR1 to GR3 contains at least two objects 10 which are in their initial position in the respective row on feed out conveyor 30, and objects 10 which have been placed in gaps G between two subsequently arranged objects 10.

According to the inventive method for arranging objects 10 in groups GR, it is not necessary for delta robot 50 to grip all objects 10, but only a small number of objects 10 for adapting the total weight of an existing group GR of objects 10 to the predetermined total weight.

Thus, in the shown embodiment, where objects 10 are arranged in eight rows on feed out conveyor 30, only one delta robot 50 is necessary for forming respective groups GR of objects 10.

Furthermore, the number of trays T which have to be provided to be filled is reduced to the number of rows on feed out conveyor 30, since groups GR of objects 10 are subsequently formed on each row on feed out conveyor 30.

Moreover, the more rows of objects 10 are provided on feed out conveyor 30, and/or the longer the transport path of feed out conveyor 30 is, the larger is the number of objects 10 which may be selected by delta robot 50 or any other suitable gripping device for being removed from a row of objects 10 on feed out conveyor 30, or which may be placed in a gap G for forming a group GR of objects 10. Thereby, the accuracy of the predetermined total weight of each group GR of objects 10 may be increased.

The control unit calculates each possible combination of objects 10 in all rows on feed out conveyor 30 for forming groups of objects 10 which fulfil the predetermined common criterion, and selects the most effective combination of objects 10, which, in the present case, necessitates a minimum of objects 10 to be handled for forming groups GR having the optimum total weight.

An optimization may also include so select the objects 10 which have to be gripped such that the moving path of the gripped objects 10 is shortened to a minimum for reducing their transport time.

The groups GR of objects 10 are directly dispensed into trays T provided below dispensing end 34 of feed out conveyor 30. Trays T may be the final package of the objects 10, and need only be closed. Alternatively, trays T may also be carriers for further treatment of the objects, such as a cooking or smoking operation.

## Claims

1. A method for arranging objects (10) in groups (GR), with the objects (10) having an individual criterion and the groups of objects (10) fulfilling a predetermined common criterion, the method comprising the steps of:
- supplying said objects (10) on a first transport device (20) in a supply order;
- positioning the objects (10) in a transportation order on a second transport device (30) according to the supply order; and
- creating a gap (G) between subsequently arranged objects (10) during positioning the objects (10) on the second transport device (30), the gap (G) having a width sufficient for accommodating a further object (10),
**characterized by** further comprising the step of:
- changing the order of the objects (10) on the second transport device (30) by picking up a selected object (10) from the second transportation device (30), and placing it in a gap (G) between two subsequently arranged objects (10).

2. The method according to claim 1, further comprising the step of:
- determining an individual criterion of each of the objects (10).

3. The method according to claim 2, further including the step of:
- changing the order of the objects (10) on the second transport device (30) by removing at least one selected object (10) from the objects (10) arranged in the transportation order.

4. The method according to any of claims 1 to 3,
wherein the individual criterion is the weight of each single object (10), and the predetermined common criterion is the total weight of the group (GR) of objects (10).

5. The method according to any of claims 1 to 4,
wherein the objects (10) are weighted before being positioned on the second transport device (30).

6. The method according to any of claims 1 to 5,
wherein the initial position of each object (10) when positioned on the second transport device (30) is registered.

7. The method according to any of claims 1 to 6,
wherein, the first and/or the second transport device (20; 30) are controlled on the basis of the determined individual criteria and the position of the objects (10) on the first and/or second transport device (20; 30).

8. The method according to any of claims 1 to 7,
wherein the objects (10) are arranged on the second transport device (30) in at least one row aligned in the transportation direction (TD) of the second transport device (30).

9. The method according to any of claims 1 to 7,
wherein the objects (10) are arranged on the second transport device (30) in two or more rows aligned in the transportation direction (TD) of the second transport device (30).

10. The method according to claim 9,
wherein an object (10) to be selected for being positioned in a gap (G) between two subsequently arranged objects (10) may be selected from any of the two or more rows of objects (10) on the second transport device (30).

11. The method according to any of claims 1 to 10,
wherein a group (GR) of objects (10) is placed in a packaging (T) by the second transport device (30).

12. A device (1) for arranging objects (10) in groups (GR) for carrying out the method according to any of claims 1 to 11 comprising:
- a first transport device for supplying said objects (10) in a supply order; and
- a second transport device (30) on which the objects (10) are positioned by the first transport device (20) in a transportation order, and with a gap (G) being provided between subsequently arranged objects (10) during positioning the objects (10) on the second transport device (30), the gap (G) having a width sufficient for accommodating a further object (10), **characterized by** further comprising:
- a pickup device (50) for picking up a selected object (10) from the second transportation device (30), and placing said object (10) in the gap (G) between two subsequently arranged objects (10) for forming a group (GR) of objects (10) that fulfils a predetermined criterion.

13. The device according to claim 12, further comprising means (40) for detecting an individual criterion of each of the objects (10).

## Patentansprüche

1. Verfahren zum Anordnen von Objekten (10) in Gruppen (GR), wobei die Objekte (10) ein individuelles Kriterium aufweisen und die Gruppen von Objekten (10) ein vorgegebenes gemeinsames Kriterium erfüllen, wobei das Verfahren die folgenden Schritte umfasst:
- Zuführen der Objekte (10) auf einer ersten Transportvorrichtung (20) in einer Zuführreihenfolge;
- Positionieren der Objekte (10) in einer Transportreihenfolge auf einer zweiten Transportvorrichtung (30) in Übereinstimmung mit der Zuführreihenfolge; und
- Herstellen eines Zwischenraums (G) zwischen nachfolgend angeordneten Objekten (10) während des Positionierens der Objekte (10) auf der zweiten Transportvorrichtung (30), wobei der Zwischenraum (G) eine Breite hat, die ausreicht, um einem weiteren Objekt (10) Platz zu bieten,
**dadurch gekennzeichnet, dass** es ferner den Schritt umfasst:
- Ändern der Reihenfolge der Objekte (10) auf der zweiten Transportvorrichtung (30), indem ein ausgewähltes Objekt (10) von der zweiten Transportvorrichtung (30) aufgenommen und in einem Zwischenraum (G) zwischen zwei nachfolgend angeordneten Objekten (10) platziert wird.

2. Verfahren nach Anspruch 1, das ferner den Schritt umfasst:
- Bestimmen eines individuellen Kriteriums von jedem der Objekte (10).

3. Verfahren nach Anspruch 2, das ferner den Schritt umfasst:
- Ändern der Reihenfolge der Objekte (10) auf der zweiten Transportvorrichtung (30) durch Entfernen von mindestens einem ausgewählten Objekt (10) von den Objekten (10), die in der Transportreihenfolge angeordnet sind.

4. Verfahren nach einem der Ansprüche 1 bis 3,
wobei das individuelle Kriterium das Gewicht von jedem einzelnen Objekt (10) ist und das vorgegebene gemeinsame Kriterium das Gesamtgewicht der Gruppe (GR) von Objekten (10) ist.

5. Verfahren nach einem der Ansprüche 1 bis 4,
wobei die Objekte (10) gewogen werden, bevor sie auf der zweiten Transportvorrichtung (30) positioniert werden.

6. Verfahren nach einem der Ansprüche 1 bis 5,
wobei die Anfangsposition von jedem Objekt (10), wenn es auf der zweiten Transportvorrichtung (30) positioniert wird, erfasstwird.

7. Verfahren nach einem der Ansprüche 1 bis 6,
wobei die erste und/oder die zweite Transportvorrichtung (20; 30) auf der Grundlage der bestimmten individuellen Kriterien und der Position der Objekte (10) auf der ersten und/oder zweiten Transportvorrichtung (20; 30) gesteuert werden/wird.

8. Verfahren nach einem der Ansprüche 1 bis 7,
wobei die Objekte (10) auf der zweiten Transportvorrichtung (30) in mindestens einer Reihe angeordnet werden, die in der Transportrichtung (TD) der zweiten Transportvorrichtung (30) ausgerichtet ist.

9. Verfahren nach einem der Ansprüche 1 bis 7,
wobei die Objekte (10) auf der zweiten Transportvorrichtung (30) in zwei oder mehr Reihen angeordnet werden, die in der Transportrichtung (TD) der zweiten Transportvorrichtung (30) ausgerichtet sind.

10. Verfahren nach Anspruch 9,
wobei ein Objekt (10), das ausgewählt werden soll, um in einem Zwischenraum (G) zwischen zwei nachfolgend angeordneten Objekten (10) positioniert zu werden, aus einer der zwei oder mehr Reihen von Objekten (10) auf der zweiten Transportvorrichtung (30) ausgewählt werden kann.

11. Verfahren nach einem der Ansprüche 1 bis 10,
wobei eine Gruppe (GR) von Objekten (10) von der zweiten Transportvorrichtung (30) in einer Verpackung (T) platziert wird.

12. Vorrichtung (1) zum Anordnen von Objekten (10) in Gruppen (GR) für die Ausführung des Verfahrens nach einem der Ansprüche 1 bis 11, umfassend:
- eine erste Transportvorrichtung zum Zuführen der Objekte (10) in einer Zuführreihenfolge; und
- eine zweite Transportvorrichtung (30), auf der die Objekte (10) von der ersten Transportvorrichtung (20) in einer Transportreihenfolge und mit einem Zwischenraum (G), der während des Positionierens der Objekte (10) auf der zweiten Transportvorrichtung (30) zwischen nachfolgend angeordneten Objekten (10) vorgesehen wird, positioniert werden, wobei der Zwischenraum (G) eine Breite hat, die ausreicht, um einem weiteren Objekt (10) Platz zu bieten,
**dadurch gekennzeichnet, dass** sie ferner umfasst:
- eine Aufnahmevorrichtung (50) zum Aufnehmen eines ausgewählten Objekts (10) von der zweiten Transportvorrichtung (30) und zum Platzieren dieses Objekts (10) in dem Zwischenraum (G) zwischen zwei nachfolgend angeordneten Objekten (10), um eine Gruppe (GR) von Objekten (10) zu bilden, die ein vorgegebenes Kriterium erfüllt.

13. Vorrichtung nach Anspruch 12, ferner umfassend Mittel (40) zum Erkennen eines individuellen Kriteriums von jedem der Objekte (10).

## Revendications

1. Procédé d'agencement d'objets (10) dans des groupes (GR), les objets (10) possédant un critère individuel et les groupes d'objets (10) satisfaisant à un critère commun prédéterminé, le procédé comprenant les étapes de :
- alimentation desdits objets (10) sur un premier dispositif de transport (20) dans un ordre d'alimentation ;
- positionnement des objets (10) dans un ordre de transport sur un deuxième dispositif de transport (30) selon l'ordre d'alimentation ; et
- création d'un espace (G) entre des objets (10) agencés subséquemment lors du positionnement des objets (10) sur le deuxième dispositif de transport (30), l'espace (G) présentant une largeur suffisante pour recevoir un autre objet (10),
**caractérisé en ce qu'**il comprend en outre l'étape de :
- modification de l'ordre des objets (10) sur le deuxième dispositif de transport (30) par prélèvement d'un objet (10) sélectionné du deuxième dispositif de transport (30) et son placement dans un espace (G) entre deux objets (10) agencés subséquemment.

2. Procédé selon la revendication 1, comprenant en outre l'étape de :
- détermination d'un critère individuel pour chacun des objets (10).

3. Procédé selon la revendication 2, comprenant en outre l'étape de :
- changement de l'ordre des objets (10) sur le deuxième dispositif de transport (30) par enlèvement d'au moins un objet (10) sélectionné parmi les objets (10) agencés dans l'ordre de transport.

4. Procédé selon l'une quelconque des revendications 1 à 3,
le critère individuel étant le poids de chaque objet (10) individuel et le critère commun prédéterminé étant le poids total du groupe (GR) d'objets (10).

5. Procédé selon l'une quelconque des revendications 1 à 4,
les objets (10) étant pesés avant d'être positionnés sur le deuxième dispositif de transport (30).

6. Procédé selon l'une quelconque des revendications 1 à 5,
la position initiale de chaque objet (10) lorsqu'il est positionné sur le deuxième dispositif de transport (30) étant enregistrée.

7. Procédé selon l'une quelconque des revendications 1 à 6,
le premier et/ou le deuxième dispositif de transport (20 ; 30) étant commandé(s) sur la base des critères individuels déterminés et de la position des objets (10) sur le premier et/ou le deuxième dispositif de transport (20 ; 30).

8. Procédé selon l'une quelconque des revendications 1 à 7,
les objets (10) étant agencés sur le deuxième dispositif de transport (30) dans au moins une rangée alignée sur la direction de transport (TD) du deuxième dispositif de transport (30).

9. Procédé selon l'une quelconque des revendications 1 à 7,
les objets (10) étant agencés sur le deuxième dispositif de transport (30) dans deux rangées ou plus alignées sur la direction de transport (TD) du deuxième dispositif de transport (30).

10. Procédé selon la revendication 9,
un objet (10) à sélectionner pour être positionné dans un espace (G) entre deux objets (10) agencés subséquemment pouvant être sélectionné à partir de l'une quelconque des deux rangées d'objets (10) ou plus sur le deuxième dispositif de transport (30).

11. Procédé selon l'une quelconque des revendications 1 à 10,
un groupe (GR) d'objets (10) étant placé dans un emballage (T) par le deuxième dispositif de transport (30).

12. Dispositif (1) d'agencement d'objets (10) dans des groupes (GR) pour la mise en œuvre du procédé selon l'une quelconque des revendications 1 à 11, comprenant:
- un premier dispositif de transport pour alimenter lesdits objets (10) dans un ordre d'alimentation ; et
- un deuxième dispositif de transport (30) sur lequel les objets (10) sont positionnés par le premier dispositif de transport (20) dans un ordre de transport et un espace (G) étant situé entre des objets (10) agencés subséquemment pendant le positionnement des objets (10) sur le deuxième dispositif de transport (30), l'espace (G) présentant une largeur suffisante pour recevoir un autre objet (10),
**caractérisé en ce qu'**il comprend en outre :
- un dispositif de prélèvement (50) pour prélever un objet (10) sélectionné du deuxième dispositif de transport (30) et pour placer ledit objet (10) dans l'espace (G) entre deux objets (10) agencés subséquemment pour former un groupe (GR) d'objets (10) qui satisfait à un critère prédéterminé.

13. Dispositif selon la revendication 12, comprenant en outre des moyens (40) pour la détection d'un critère individuel de chacun des objets (10).
